# EUROPEAN PATENT APPLICATION

(11) **EP 1 742 444 A1**
(43) Date of publication of application: **10.01.2007**
(21) Application number: 06013900.3
(22) Date of filing: 05.07.2006
(51) Int. Cl.: H04L 29/08

(54) **Object transmission based multilink gateway**

(30) Priority: 05.07.2005 EP 05014549
(71) Applicant: Tellitec Engineering GmbH, 13507 Berlin (DE)
(72) Inventor: Nikolaus, Boris, 13465 Berlin (DE); Zanoth, Christian, 13507 Konz (DE)
(74) Representative: Richter, Thomas Kurt Reinhold

(57) **Abstract**

The invention is a method to handle the transmission of objects within a multilink network environment. The method is keeping the links (3a,3b,3c;6) separated for each to be transmitted object so that the quality of service of each link or other facts available at a multilink gateway (5) can be considered prior or during the transmission with regard to the choice of the respective link. As a result the optimal link per object can be chosen.

## Description

### object transmission based multilink gateway

### 0. Abstract

The invention is a method to handle the transmission of objects within a multilink network environment. The method is keeping the links separated for each to be transmitted object so that the quality of service of each link or other facts available at a multilink gateway can be considered prior or during the transmission with regard to the choice of the respective link. As a result the optimal link per object can be chosen.

### 1. Prior art

For data transmission within a network using multiple links, several ways for spreading those transmissions across those multiple links are possible. One way is to add one or several links to an existing one to combine them to a (virtual) high bandwidth link.

The German patent 198 60 756/european patent EP 0998 093 B1 of Teles AG describes a method how data transmission within an existing layer 7 connection is speeded up by adding a broadband link to a narrowband link. A clear disadvantage of this method is that the narrowband link is always used, even if a broadband channel has been added, making the narrowband link unusable for other transmissions. Another disadvantage is that the combined use of several links provides a poor quality of service: E. g. if a low-delay, highly reliable narrowband link is combined with a high-delay, lossy broadband link, the resulting combination has a high delay (assuming packet resequencing at the receiver side) and a loss rate nearly as high as of the broadband link (assuming most traffic is transmitted on this link)

This invention is about a method to handle the transmission of objects within a multilink network environment and how several links can be used concurrently in a multilink network environment, keeping the links separated for each to be transmitted object so that the quality of service of each link can be considered prior or during the transmission with regard to the choice of the respective link. An object is to be understood as a layer 7 connection, e.g. a single ftp or http get download. The decision, which link should be used, is made by a multilink gateway, which monitors the multiple links and constantly determinates the quality of service of such links. A link is to be understood as a packet switched network or a part thereof. Beside the quality of service of the different links the multilink gateway also takes other parameters into account when assigning an object transmission to a respective link, e.g. the date and time, the cost which occur for the use of the link, the object's data volume, the time to transmit the object or the elapsed time, a priority assigned to an object, the content type of the object (peer-to-peer application, file transfer via ftp, bitmap via http, voice-over-IP, etc.) or type of application (interactive vs. non-interactive).
As a result the usage of the links for the transmission of objects can be optimized in order to meet cost, speed, end-user convenience or other constraints. Two examples for typical applications are:
- Objects of a lower commercial value can be transmitted over cheaper links and objects of a higher commercial value can be transmitted over more expensive links.
- Time critical objects can be delivered over low-delay links and non time critical objects can be delivered high-delay links.

### 2. Claims

Method to transmit requested objects between a transmitter and a receiver by using a multilink gateway and multiple links but keeping the links separated for each to be transmitted object so that the optimal link per object can be chosen by applying the following steps:
a) Request from a first node (1) to a second node (4) to transmit an object from second node (4) to first node (1);
b) transmission of the object from the second node (4) to the first node (1) by transmitting the data first to a multilink gateway (5);
c) continuous monitoring (performed by the multilink gateway (5)) of each link which is available between the multilink gateway (5) and the first node (1) - until the object is completely transmitted - in order to determinate the optimal link to forward the object's remaining data (performed by the multilink gateway (5)) to the first node (1);
   c1) Selection of the link
   c2) Transmission of a portion of the object's data

### 3. Embodiment

The described embodiment refers to a network with multiple links - in this case two - whereby the first link is a low-delay, highly reliable narrowband, bidirectional unicast link (3) and the second link is a high-delay, lossy, unidirectional multicast broadband link (6). Both links are connected to a multilink gateway (5).

### Figure 1:

A node (4) transmits an object (a) via a unicast network (3) to a second node (1) - by passing the object first to a multilink gateway (5). The object (a) may be transmitted by the first node (4) on request from the second node (1) or may be only pushed by the first node (4) to a listening second node (1). The receiving node (1) is additionally connected to a multicast network (6) and the transmitting node (4) has access to the same multicast network (6) via the multilink gateway (5).

### Figure 2:

In case a certain portion of the object has been transmitted (b₁) or a certain time (t) has elapsed since the transmission was started and the object is not yet fully transmitted, then the multilink gateway (5) may decide to use the multicast network (6) instead of the unicast network (3) for the transmission of the remaining part of the object (b₂). In case the object (a) falls below the object threshold size or the waiting time (t), then the object will only be forwarded by the multilink gateway (5) over the unicast network (3).

### Figure 3:

In case the unicast network (3) provides free capacity for the transmission, then a subsequent transmission of an object (c) may again be forwarded by the multilink gateway (5) over the unicast network (3). Again, the multilink gateway (5) may decide to use the multicast network (6) instead of the unicast network (3) after a certain time (t) or a certain portion of the object has been transmitted. Such decision to switch the link may also be taken by the multilink gateway (5) in case the quality of service of the unicast network (3) decreases below a certain threshold or quality of service of the multicast network (6) starts to exceed a certain one.

### Figure 4:

In case the unicast network (3) does not provide enough capacity for any object transmission (e.g. congestion of the unicast network (3) because of the transmission of another object (d)), then the multilink gateway (5) may decide to forward further objects (e, f, g, h, i, j) using the multicast network (6) immediately at the beginning of each transmission.

### No Figure:

The multilink gateway (5) may decide to switch an active transmission of an object back to the unicast network (3) if capacity becomes again available on the unicast network (3).

### No Figure:

The switching between the unicast network, the multicast network, or any mixed mode network transmission of an object may also be done in case of any other event, e.g. the multilink gateway (5) may take the time to transmit an object, the object size, the object type, any quality of service constraints, the quality characteristics of the unicast network (3) and/or multicast network (6) and/or the available bandwidth of the unicast and/or multicast network, a priority assigned to an object, the costs for the use of the link into account when deciding which network link is used for the transmission of an object.

### Figure 5:

In case the multicast network (6) is used for the transmission of the object, then the data source (4) transmits the object via the unicast network (3) to the multilink gateway (5) first, which then forwards the requested object via the multicast network (6) to the requesting or listening nodes (1) and (2).

### Figure 6:

The node which initially transmits the object (4) may be at the same physical location as the multilink gateway (5) - both devices (4 and 5) may even be integrated in the same physical device.

### Figure 7:

The unicast network (3) and the multicast network (6) may be from a physical point of view partially or completely identical - which means that those two networks ((3) and (6)) may be two virtual networks which reside on the same physical network infrastructure.

### No Figure:

Another embodiment of the invention may also be that the multilink gateway (5) may also be the gateway of a so called "one or two way satellite Internet service", which receives requests via the unicast network (3) from a first node (1) for an object residing at a second node (4) and which then requests such object from the second node (4) and then returns such object via the unicast network (3) to the requesting node (1). In case the same object is also requested by another node (2) from the object providing node (4), then the multilink gateway (5) may decide to return the requested data not via the unicast network (3), but via the multicast network (6) in order to avoid a redundant transmission of objects.

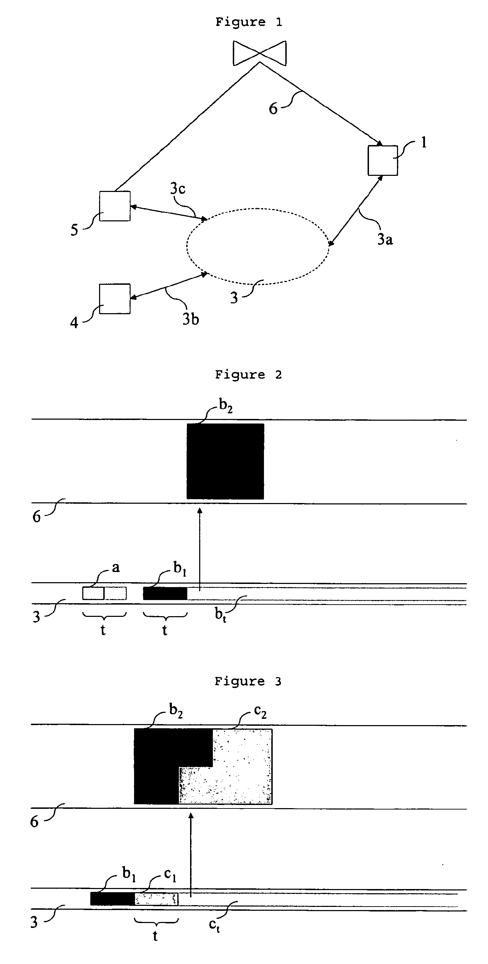

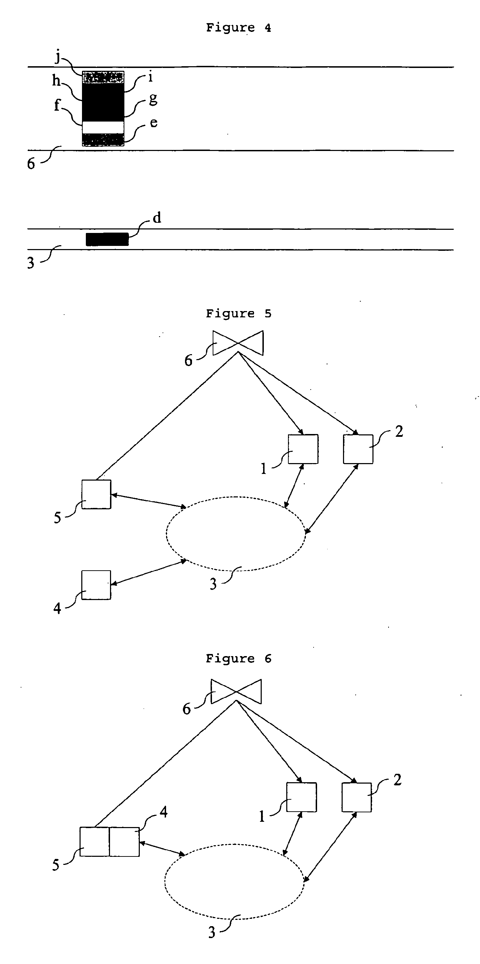

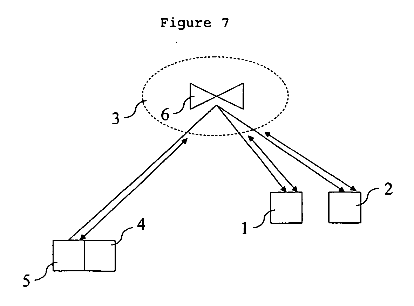

## Claims

1. Method to transmit requested objects between a transmitter and a receiver by using a multilink gateway and multiple links but keeping the links separated for each to be transmitted object so that the optimal link per object can be chosen by applying the following steps:
a) Request from a first node (1) to a second node (4) to transmit an object from second node (4) to first node (1);
b) transmission of the object from the second node (4) to the first node (1) by transmitting the data first to a multilink gateway (5);
c) continuous monitoring (performed by the multilink gateway (5)) of each link which is available between the multilink gateway (5) and the first node (1) - until the object is completely transmitted - in order to determinate the optimal link to forward the object's remaining data (performed by the multilink gateway (5)) to the first node (1);
c1) Selection of the link
c2) Transmission of a portion of the object's data.
